# EUROPEAN PATENT APPLICATION

(11) **EP 2 164 034 A1**
(43) Date of publication of application: **17.03.2010**
(21) Application number: 08757793.8
(22) Date of filing: 20.06.2008
(51) Int. Cl.: G06Q 30/00

(54) **ADVERTISEMENT EVENT STATISTIC METHOD AND ADVERTISEMENT INFORMATION SYSTEM AND ASSOCIATED DEVICES**

(30) Priority: 29.06.2007 CN 200710127797
(71) Applicant: Huawei Technologies Co., Ltd., Longgang District, Shenzhen Guangdong 518129 (CN)
(72) Inventor: GU, Chong, 518129 Shenzhen (CN); ZHAO, Yang, 518129 Shenzhen (CN); HU, Hanqiang, 518129 Shenzhen (CN)
(74) Representative: Kreuz, Georg Maria
(86) International application number: PCT/CN2008/071384
(87) International publication number: WO 2009/003388

(57) **Abstract**

A method for measuring advertisement events, an advertisement information system, and relevant devices are disclosed. The method for measuring advertisement events includes: receiving an advertisement identifier, a user action policy and advertisement information delivered by an advertisement server; judging whether a user response action meets preset conditions according to the user action policy after a user responds to the advertisement information; and processing the user response action and the corresponding advertisement identifier accordingly if the user response action meets the preset conditions. An advertisement information system, an advertisement server, an advertisement client and a terminal are also disclosed.

## Description

This application claims a priority from the Chinese Patent Application No. 200710127797.1, filed with the Chinese Patent Office on June 29, 2007 and entitled "Method for Measuring Advertisement Events, Advertisement Information System, and Relevant Devices", the contents of which are incorporated herein by reference in their entirety.

### Field of the Invention

The present invention relates to the communication field, and in particular, to a method for measuring advertisement events, an advertisement information system, and relevant devices.

### Background of the Invention

Currently, an advertiser may be charged for an advertisement in different modes based on different measurement data. For example, the charge is measured according to the count of launches of the advertisement, or, more precisely, the charge is measured according to the corresponding user events caused by the advertisement. However, because the content of one advertisement is different from the content of another, the user event to be measured varies with the advertisement content. Currently, advertisement events can be measured in many ways, as exemplified below:

Cost-per-Action (CPA): The charge for a web advertisement is measured by the action taken by each visitor in response to the advertisement. User actions are defined specifically, for example, a completed transaction, registration of a user, or a click on the web advertisement;

Cost-per-click (CPC): The charge for an advertisement is measured by the count of clicks on the advertisement such as a keyword-based advertisement;

Cost-per-Thousand Impressions (CPM): A price is charged for every 1000 occasions of displaying an advertisement (each occasion of display gives an impression to the user). CPM is one of the most popular web advertisement pricing modes;

Cost-per-Order (CPO): The charge is based on each order or each transaction.

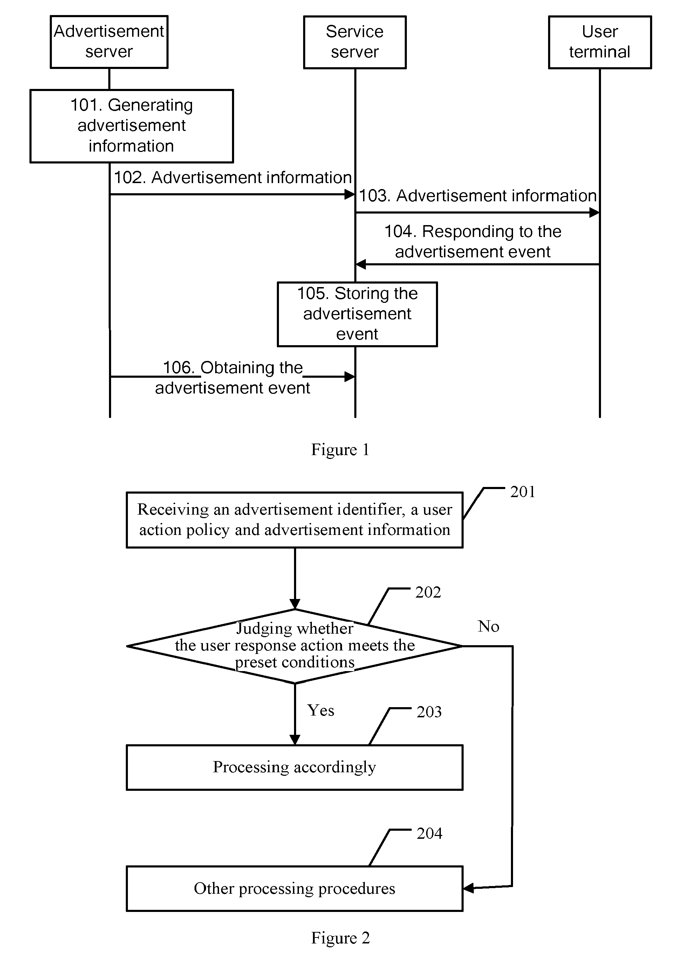

In the prior art, the method for measuring advertisement events varies with the advertisement service mode. For example, the CPA service process is shown in Figure 1.

As shown in Figure 1, the process of the CPA service includes the following steps:

101. The advertisement server generates a personalized advertisement according to user information and other factors.

102. The generated advertisement is sent to the service server.

103. The service server delivers the advertisement to the user terminal.

104. The user responds to the specific advertisement event, for example, clicks the advertisement. When the user clicks the advertisement, the user terminal responds to the service server about the advertisement event.

105. The service server records the advertisement event.

106. The advertisement server obtains advertisement events from the service server periodically.

The foregoing process reveals that: The solution provided in the prior art needs to record corresponding advertisement event according to the preset rules for each service. That is, for each type of advertisement service, different advertisement events need to be collected. Therefore, for each type of advertisement service in the prior art, a different process is required for collecting advertisement events. The advertisement server and service server need to carry out numerous processes to collect different advertisement events, thus reducing flexibility of advertisement services.

### Summary of the Invention

Embodiments of the present invention provide a method for measuring advertisement events, an advertisement information system and relevant devices to improve flexibility of advertisement services.

A method for measuring advertisement events in an embodiment of the present invention includes: receiving an advertisement identifier, a user action policy and advertisement information delivered by an advertisement server; judging whether a user response action meets preset conditions according to the user action policy after a user responds to the advertisement information; and processing the user response action and the corresponding advertisement identifier accordingly if the user response action meets the preset conditions.

An advertisement information system provided in an embodiment of the present invention includes: an advertisement server, adapted to deliver an advertisement identifier, a user action policy and advertisement information; and a terminal, adapted to: receive the advertisement identifier, user action policy and advertisement information delivered by the advertisement server, judge whether the user response action meets the preset conditions according to the user action policy after the user responds to the advertisement information, and store the user response action and the corresponding advertisement identifier if the user response action meets the preset conditions. Alternatively, the advertisement information system includes: an advertisement server, adapted to deliver an advertisement identifier, a user action policy and advertisement information; and a terminal, adapted to: receive the advertisement identifier, user action policy and advertisement information delivered by the advertisement server, judge whether the user response action meets the preset conditions according to the user action policy after the user responds to the advertisement information, and send the user response action and the corresponding advertisement identifier to the advertisement server if the user response action meets the preset conditions.

An advertisement server provided in an embodiment of the present invention includes: a policy managing unit, adapted to: set a user action policy, and manage the user action policy; an advertisement information generating unit, adapted to generate advertisement information and an advertisement identifier; and a sending unit, adapted to deliver the advertisement identifier, user action policy and advertisement information.

An advertisement client provided in an embodiment of the present invention includes: a receiving unit, adapted to receive an advertisement identifier, a user action policy and a current user response action; a judging unit, adapted to judge whether the current user response action matches the user response action carried in the user action policy; and a storing unit, adapted to store the current user response action and the corresponding advertisement identifier if the current user response action matches the user response action carried in the user action policy.

A terminal provided in an embodiment of the present invention includes: a service client, adapted to: receive a user action policy, advertisement information and an advertisement identifier, judge whether the user response action meets the preset conditions according to the user action policy after the user responds to the advertisement information, and forward the user response action and the corresponding advertisement identifier if the user response action meets the preset conditions; and an advertisement client, adapted to store the user response action and the corresponding advertisement identifier received from the service client. Alternatively, the terminal includes: a service client, adapted to receive advertisement information and an advertisement identifier, and send a user response action and a corresponding advertisement identifier after the user responds to the advertisement information; and an advertisement client, adapted to: judge whether the user response action received from the service client meets the preset conditions according to the user action policy received from the advertisement server, and store the user response action and the corresponding advertisement identifier if the user response action meets the preset conditions.

The foregoing technical solution reveals that the embodiments of the present invention provide the following benefits:

In the embodiments of the present invention, the advertisement server delivers the user action policy; when the user responds, a judgment is made about whether the user response action meets the preset conditions according to the user action policy; and the corresponding processing is performed if the user response action meets the preset conditions. Therefore, for each advertisement service, a different user action policy may be set so that different user response actions may be stored or reported. That is, the embodiments of the present invention are applicable to various advertisement services, thus improving flexibility of advertisement services.

### Brief Description of the Drawings

Figure 1 shows a process of measuring events in the prior art;

Figure 2 is a general flowchart of a method for measuring advertisement events in an embodiment of the present invention;

Figure 3 is a flowchart of a method for measuring advertisement events in a first embodiment of the present invention;

Figure 4 is a flowchart of a method for measuring advertisement events in a second embodiment of the present invention;

Figure 5 is a flowchart of a method for measuring advertisement events in a third embodiment of the present invention;

Figure 6 shows an advertisement information system in an embodiment of the present invention;

Figure 7 shows an advertisement server in an embodiment of the present invention;

Figure 8 shows an advertisement client in an embodiment of the present invention; and

Figure 9 shows a terminal in an embodiment of the present invention.

### Detailed Description of the Invention

A method for measuring advertisement events, an advertisement information system and relevant devices are provided in an embodiment of the present invention to improve flexibility of advertisement services.

Figure 2 is a general flowchart of a method for measuring advertisement events in an embodiment of the present invention. The general process includes:

201. An advertisement identifier, a user action policy and advertisement information are received.

The advertisement server delivers the advertisement identifier, user action policy and advertisement information to the terminal. The delivery mode is detailed in the embodiments to be described later.

202. Whether the user response action meets the preset conditions is judged; proceeding to step 203 if the preset conditions are met; or else executing step 204.

When the user responds to the received the advertisement information, a judgment is made about whether the current user response action (for example, browse, click, download) meets the preset conditions. The judgment mode is detailed in the embodiments to be described later.

203. The user response action and advertisement identifier is processed.

If the current user response action meets the preset conditions, the current user response action and the corresponding advertisement identifier (namely, the identifier of the advertisement to which the user responds) are processed accordingly.

In this embodiment, the processing mode may be: storing the current user response action and the corresponding advertisement identifier, or reporting the current user response action and the corresponding advertisement identifier to the advertisement server, or any other processing procedure, which is not limited herein.

204. Other processing procedures are performed.

If the current user response action does not meet the preset conditions, other processes are continued. Other processes may be: sending other advertisements, or terminating the process. The specific process is not limited herein.

In this embodiment, the advertisement server delivers the user action policy; when the user responds, a judgment is made about whether the user response action meets the preset conditions according to the user action policy; the user response action is stored only if it meets the preset conditions. Therefore, for each advertisement service, a different user action policy may be set so that different user response actions may be stored. That is, this embodiment is applicable to various advertisement services, thus improving flexibility of advertisement services.

In this embodiment, the user response action and the corresponding advertisement identifier are stored. It is understandable that such information may be forwarded to the advertisement server directly without being stored.

From the perspective of the advertisement service type, the method for measuring advertisement events is described in two embodiments below:

(i) Temporary advertisement service:

Depending on the client which judges the user response action, the methods for measuring advertisement events in a temporary advertisement service are classified into two types:

The user response action is judged by the service client:

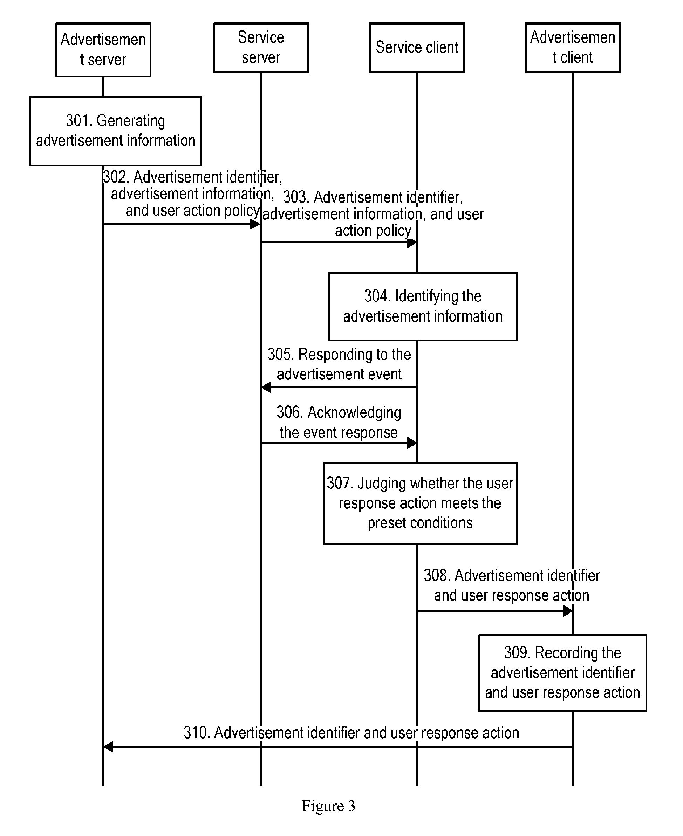

As shown in Figure 3, the method for measuring advertisement events in the first embodiment of the present invention includes:

301. The advertisement server generates advertisement information.

The advertisement server generates personalized advertisement information according to the user information, context information, or other relevant information. The method for generating the personalized advertisement information is based on the prior art, and is not limited herein.

The advertisement server generates an advertisement identifier again according to the generated advertisement information, or get the pre-allocated advertisement identifier .

302. The advertisement server sends the advertisement identifier, advertisement information, and user action policy to the service server.

The advertisement server sends the generated advertisement identifier, advertisement information, and preset user action policy to the service server.

The user action policy ,may be configured according to the actual conditions, and indicates which user response actions need to be recorded.

303. The service server sends the advertisement identifier, advertisement information, and user action policy to the service client.

The service server sends the advertisement identifier, advertisement information, and user action policy along with the service content to the service client.

304. The service client identifies the advertisement information.

The service client identifies the advertisement information according to the advertisement identifier.

305. The service client responds to the advertisement event.

After the user responds to the advertisement by clicking, browsing, downloading, forwarding and so on, the service client responds to the service server about the advertisement event.

306. The service server acknowledges the event response to the service client.

The service server sends a feedback about success of the advertisement event to the service client.

307. The service client judges whether the user response action meets the preset conditions.

According to the obtained user action policy, the service client judges whether the current user response action meets the preset conditions. The specific judging process may be: judging whether the current user response action matches or is consistent with the user response action to be recorded which is included in the user action policy; and, if matching or consistent, determining that the current user response action meets the preset conditions.

308. The service client sends the advertisement identifier and user response action to the advertisement client.

If the current user response action meets the preset conditions, the service client sends the current user response action and the advertisement identifier corresponding to the response action to the advertisement client.

309. The advertisement client records the current user response action and the corresponding advertisement identifier.

The advertisement client stores the user response action and the corresponding advertisement identifier from the service client.

310. The advertisement client feeds back the stored advertisement identifier and user response action to the advertisement server.

If the preset conditions are met, the advertisement client sends the locally stored user response action and the corresponding advertisement identifier to the advertisement server.

The condition for feedback may be: the specified time arrives, or the stored user response actions accrue to a specified quantity.

It is understandable that the advertisement server may obtain the user response action and the corresponding advertisement identifier actively from the advertisement client when specified conditions are met.

The advertisement server charges the advertiser upon receiving the user response action and the corresponding advertisement identifier. The charging process is the same as that in the prior art, and is not repeated further.

In this embodiment, the advertisement service is regarded as temporary. Therefore, the advertisement server delivers the user action policy to the service client gradually, and a new user action policy may be set as required by each temporary advertisement service.

In this embodiment, the advertisement client stores the user response action and the corresponding advertisement identifier. It is understandable that the advertisement client may forward such information to the advertisement server directly without storing such information.

B. The advertisement client judges the user response action:

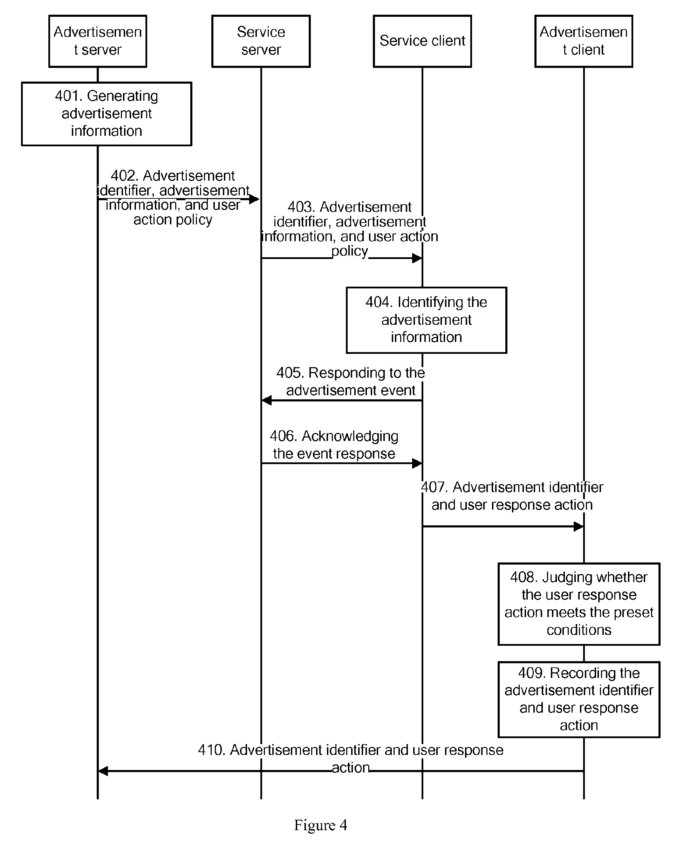

As shown in Figure 4, the method for measuring advertisement events in the second embodiment of the present invention includes:

401. The advertisement server generates advertisement information.

The advertisement server generates personalized advertisement information according to the user information, context information, or other relevant information. The method for generating the personalized advertisement information is based on the prior art, and is not limited herein.

The advertisement server generates an advertisement identifier according to the generated advertisement information, or get the pre-allocated advertisement identifier.

402. The advertisement server sends the advertisement identifier, advertisement information, and user action policy to the service server.

The advertisement server sends the generated advertisement identifier, advertisement information, and preset user action policy to the service server.

The user action policy may be configured according to the actual conditions, and indicates which user response actions need to be recorded.

403. The service server sends the advertisement identifier, advertisement information, and user action policy to the service client.

The service server sends the advertisement identifier, advertisement information, and user action policy along with the service content to the service client.

404. The service client identifies the advertisement information.

The service client identifies the advertisement information according to the advertisement identifier.

405. The service client responds to the advertisement event.

After the user responds to the advertisement by clicking, browsing, downloading, forwarding and so on, the service client responds to the service server about the advertisement event.

In practice, the service client may also indicate the user action policy to the user after receiving the user action policy from the advertisement server. Therefore, the user can take effective actions such as clicking, browsing, downloading and forwarding according to the user action policy.

406. The service server acknowledges the event response to the service client.

The service server sends a feedback about success of the advertisement event to the service client.

It should be noted that steps 405 and 406 are optional.

407. The service client sends the current user response action, advertisement identifier and user action policy to the advertisement client.

After the user responds to the advertisement, the service client sends the current user response action, advertisement identifier and user action policy to the advertisement client.

408. The advertisement client judges whether the user response action meets the preset conditions.

According to the obtained user action policy, the advertisement client judges whether the current user response action meets the preset conditions. The specific judging process may be: judging whether the current user response action matches or is consistent with the user response action to be recorded which is included in the user action policy; and, if matching or consistent, determining that the current user response action meets the preset conditions.

409. The advertisement client records the current user response action and the corresponding advertisement identifier.

The advertisement client stores the user response action and the corresponding advertisement identifier from the service client.

410. The advertisement client feeds back the stored advertisement identifier and user response action to the advertisement server.

If the preset conditions are met, the advertisement client sends the locally stored user response action and the corresponding advertisement identifier to the advertisement server.

The condition for feedback may be: the specified time arrives, or the stored user response actions accrue to a specified quantity.

It is understandable that the advertisement server may obtain the user response action and the corresponding advertisement identifier actively from the advertisement client when specified conditions are met.

The advertisement server charges the advertiser upon receiving the user response action and the corresponding advertisement identifier. The charging process is the same as that in the prior art, and is not repeated further.

In this embodiment, the advertisement service is regarded as temporary. Therefore, the advertisement server delivers the user action policy to the service client, and a new user action policy may be set as required by each temporary advertisement service.

In this embodiment, the advertisement client stores the user response action and the corresponding advertisement identifier. It is understandable that the advertisement client may forward such information to the advertisement server directly without storing such information.

The interaction between the service server and the service client in this embodiment may be understood as an interaction process between each different service server and each different service client. That is, the service server which delivers the advertisement content and the service client which receives the advertisement content may be different from the service server and service client which perform the interaction about the advertisement.

The foregoing two embodiments describe processing of temporary advertisement services. In the foregoing embodiments, the user action policy may be set and delivered temporarily as required by different advertisement services, thus further improving flexibility of advertisement services.

The following describes a process of a method for measuring advertisement events in a fixed advertisement service:

(ii) Fixed advertisement service:

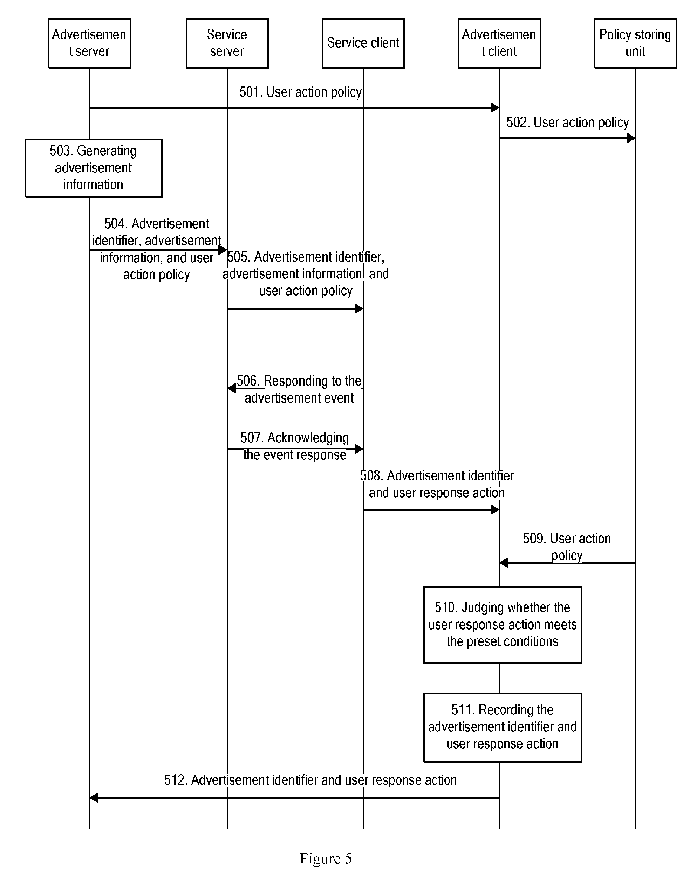

As shown in Figure 5, the method for measuring advertisement events in the third embodiment of the present invention includes:

501. The advertisement server sends the preset user action policy to the advertisement client.

The advertisement server sends the preset user action policy to the advertisement client, where the user action policy indicates which user response actions need to be recorded.

502. The advertisement client sends the user action policy to the policy storing unit for storing.

503. The advertisement server generates advertisement information.

The advertisement server generates personalized advertisement information according to the user information, context information, or other relevant information. The method for generating the personalized advertisement information is based on the prior art, and is not limited herein.

The advertisement server generates an advertisement identifier according to the generated advertisement information, or get the pre-allocated advertisement identifier.

504. The advertisement server sends the advertisement identifier and advertisement information to the service server.

The advertisement server sends the generated advertisement identifier and advertisement information to the service server.

505. The service server sends the advertisement identifier and advertisement information to the service client.

The service server sends the advertisement identifier and advertisement information along with the service content to the service client.

506. The service client responds to the advertisement event.

After the user responds to the advertisement by clicking, browsing, downloading, forwarding and so on, the service client responds to the service server about the advertisement event.

507. The service server acknowledges the event response to the service client.

The service server sends a feedback about success of the advertisement event to the service client.

508. The service client sends the current user response action and the advertisement identifier to the advertisement client.

After the user responds to the advertisement, the service client sends the current user response action and the advertisement identifier to the advertisement client.

509. The advertisement client reads the user action policy from the policy storing unit.

510. The advertisement client judges whether the user response action meets the preset conditions.

According to the obtained user action policy, the advertisement client judges whether the current user response action meets the preset conditions. The specific judging process may be: judging whether the current user response action matches or is consistent with the user response action to be recorded which is included in the user action policy; and, if matching or consistent, determining that the current user response action meets the preset conditions.

511. The advertisement client records the current user response action and the corresponding advertisement identifier.

The advertisement client stores the user response action and the corresponding advertisement identifier from the service client.

512. The advertisement client feeds back the stored advertisement identifier and user response action to the advertisement server.

If the preset conditions are met, the advertisement client sends the locally stored user response action and the corresponding advertisement identifier to the advertisement server.

The condition for feedback may be: the specified time arrives, or the stored user response actions accrue to a specified quantity.

It is understandable that the advertisement server may obtain the user response action and the corresponding advertisement identifier actively from the advertisement client when specified conditions are met.

The advertisement server charges the advertiser upon receiving the user response action and the corresponding advertisement identifier. The charging process is the same as that in the prior art, and is not repeated further.

In this embodiment, the advertisement service may be regarded as fixed, and the user action policy is not easily changed. Therefore, the advertisement server sends the user action policy to the policy storing unit directly for storing.

The foregoing embodiment is about processing of a fixed advertisement service. In the foregoing embodiment, the user action policy is directly stored in the policy storing unit. Therefore, the advertisement server does not need to deliver the user action policy on every occasion, thus improving efficiency of the advertisement service.

It should be noted that the service client and advertisement client in the foregoing embodiment may be independent of each other; one advertisement client may serve multiple service clients, or the service client is integrated with the advertisement client, and the specific implementation mode of the advertisement client and service client is not limited herein.

Moreover, the policy storing unit and advertisement client may also be independent of each other. That is, the policy storing unit is exclusively designed for storing various policies; the advertisement client reads the user action policy from the policy storing unit directly when the advertisement client knows the user action policy. Alternatively, the policy storing unit may be integrated with the advertisement client, namely, the policy storing unit is regarded as a storing apparatus of the advertisement client.

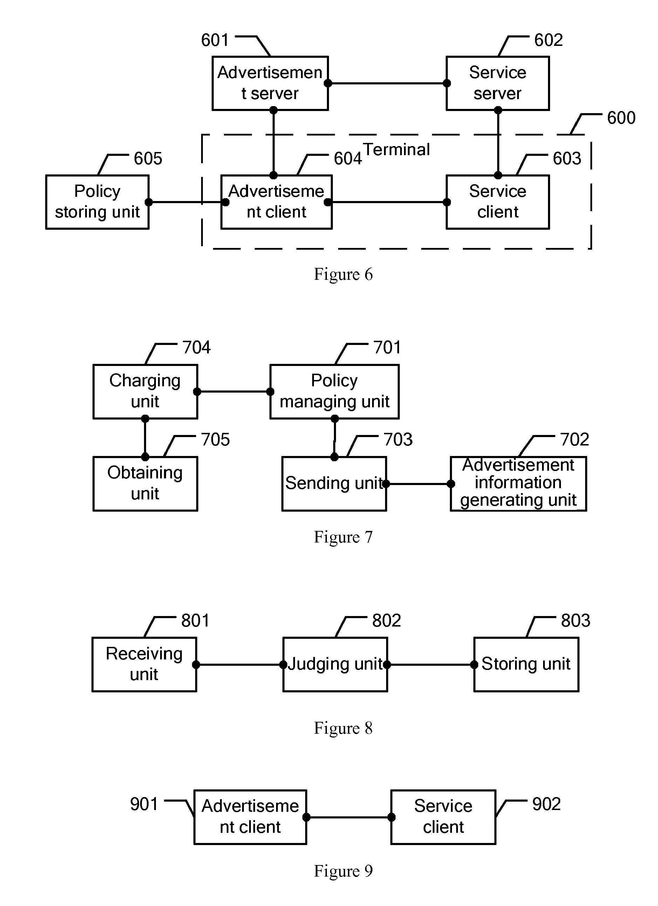

An apparatus provided in an embodiment of the present invention is described below. As shown in Figure 6, an advertisement information system in this embodiment includes:
an advertisement server 601, adapted to deliver an advertisement identifier, a user action policy and advertisement information; and
a terminal 600, adapted to: receive the advertisement identifier, user action policy and advertisement information delivered by the advertisement server 601, judge whether the user response action meets the preset conditions according to the user action policy after the user responds to the advertisement information, and store the user response action and the corresponding advertisement identifier if the user response action meets the preset conditions.

Alternatively, the advertisement information system includes:
an advertisement server 601, adapted to deliver an advertisement identifier, a user action policy and advertisement information; and
a terminal 600, adapted to: receive the advertisement identifier, user action policy and advertisement information delivered by the advertisement server 601, judge whether the user response action meets the preset conditions according to the user action policy after the user responds to the advertisement information, and send the user response action and the corresponding advertisement identifier to the advertisement server 601 if the user response action meets the preset conditions.

The terminal 600 includes:
a service client 603, adapted to: judge whether the user response action meets the preset conditions according to the user action policy received from the advertisement server 601 after the user responds to the advertisement information, and forward the user response action and the corresponding advertisement identifier if the user response action meets the preset conditions; and
an advertisement client 604, adapted to store the user response action and the corresponding advertisement identifier received from the service client 603; or a service client 603, adapted to send the user response action and the corresponding advertisement identifier after the user responds to the advertisement information; and
an advertisement client 604, adapted to: judge whether the user response action received from the service client meets the preset conditions according to the user action policy received from the advertisement server 603, and store the user response action and the corresponding advertisement identifier if the user response action meets the preset conditions.

In this embodiment, the advertisement information system further includes:
a service server 602, adapted to: receive the advertisement information and advertisement identifier from the advertisement server 601, and forward the advertisement information and advertisement identifier to the service client 603; and
a policy storing unit 605, adapted to store the user action policy delivered by the advertisement server 601.

The service client 603 and advertisement client 604 may be integrated together or independent of each other.

The policy storing unit 605 may be integrated in the advertisement client 604, or set independently.

As shown in Figure 7, an advertisement server in an embodiment of the present invention includes:
a policy managing unit 701, adapted to set a user action policy;
an advertisement information generating unit 702, adapted to generate advertisement information and an advertisement identifier;
a sending unit 703, adapted to deliver the advertisement identifier, user action policy and advertisement information;
an obtaining unit 705, adapted to obtain the stored user response action and the corresponding advertisement identifier from an advertisement client; and
a charging unit 704, adapted to charge an advertiser according to the obtained user response action and the corresponding advertisement identifier.

As shown in Figure 8, an advertisement client in an embodiment of the present invention includes:
a receiving unit 801, adapted to receive an advertisement identifier, a user action policy and a current user response action;
a judging unit 802, adapted to judge whether the current user response action matches the user response action carried in the user action policy; and
a storing unit 803, adapted to store the current user response action and the corresponding advertisement identifier if the current user response action matches the user response action carried in the user action policy.

As shown in Figure 9, a terminal in an embodiment of the present invention includes:
a service client 902, adapted to: receive a user action policy, advertisement information and an advertisement identifier, judge whether the user response action meets the preset conditions according to the user action policy after the user responds to the advertisement information, and forward the user response action and the corresponding advertisement identifier if the user response action meets the preset conditions; and
an advertisement client 901, adapted to store the user response action and the corresponding advertisement identifier received from the service client; or a service client 902, adapted to receive advertisement information and an advertisement identifier, and send a user response action and a corresponding advertisement identifier after the user responds to the advertisement information; and
an advertisement client 901, adapted to: judge whether the user response action received from the service client meets the preset conditions according to the user action policy received from the advertisement server, and store the user response action and the corresponding advertisement identifier if the user response action meets the preset conditions.

It is understandable to those skilled in the art that all or partial steps of the preceding embodiments can be implemented by hardware instructed by a program. The program may be stored in a computer-readable storage medium. When being executed, the program includes the following steps:
receiving an advertisement identifier, a user action policy and advertisement information delivered by an advertisement server; and
judging whether a user response action meets preset conditions according to the user action policy after a user responds to the advertisement information; and processing the user response action and the corresponding advertisement identifier accordingly if the user response action meets the preset conditions.

The storage medium mentioned above may be a Read-Only Memory (ROM), a magnetic disk or a compact disk.

The above is a detailed description of a method for measuring advertisement events, an advertisement information system and relevant devices under the present invention. Although the invention has been described through some exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A method for measuring advertisement events, comprising:
receiving an advertisement identifier, a user action policy and advertisement information delivered by an advertisement server; and
judging whether a user response action meets preset conditions according to the user action policy after a user responds to the advertisement information; and processing the user response action and the corresponding advertisement identifier accordingly if the user response action meets the preset conditions.

2. The method of claim 1, wherein the process of processing the user response action and the corresponding advertisement identifier accordingly comprises:
storing the user response action and the corresponding advertisement identifier.

3. The method of claim 1, wherein the process of processing the user response action and the corresponding advertisement identifier accordingly comprises:
sending the user response action and the corresponding advertisement identifier to the advertisement server so that the advertisement server is instructed to charge according to the user response action and the corresponding advertisement identifier.

4. The method of claim 2 or 3, wherein the process of judging whether the user response action meets the preset conditions according to the user action policy comprises:
judging whether the current user response action matches a user response action corresponding to a user response action identifier carried in the user action policy; and, if matching, determining that the current user response action meets the preset conditions.

5. The method of claim 2 or 3, wherein: the advertisement information is generated by the advertisement server, and the advertisement identifier is generated by the advertisement server according to the advertisement information.

6. The method of claim 5, wherein: after the user responds to the advertisement information, the method further comprises:
sending a response to an advertisement to a service server ; and
receiving the response returned by the service server.

7. The method of claim 4, wherein: a service client judges whether the current user response action matches the user response action carried in the user action policy; and
the process of storing the user response action and the corresponding advertisement identifier comprises:
sending, by the service client, the user response action and the corresponding advertisement identifier to an advertisement client if the current user response action meets the preset conditions, and instructing the advertisement client to store the user response action and the corresponding advertisement identifier.

8. The method of claim 4, wherein the process of judging whether the current user response action matches the user response action carried in the user action policy comprises:
obtaining, by an advertisement client, the current user response action, advertisement identifier and user action policy; and
judging, by the advertisement client, whether the current user response action matches the user response action carried in the user action policy.

9. The method of claim 8, wherein: the current user response action and advertisement identifier are obtained from a service client; and
the user action policy is obtained from the service client or a preset storing unit.

10. An advertisement information system, comprising:
the advertisement server is adapted to deliver an advertisement identifier, a user action policy and advertisement information; and
a terminal, adapted to: receive the advertisement identifier, user action policy and advertisement information delivered by the advertisement server, judge whether a user response action meets preset conditions according to the user action policy after a user responds to the advertisement information, and store the user response action and the corresponding advertisement identifier if the user response action meets the preset conditions;
or
an advertisement server, adapted to deliver an advertisement identifier, a user action policy and advertisement information; and
a terminal, adapted to: receive the advertisement identifier, user action policy and advertisement information delivered by the advertisement server, judge whether a user response action meets preset conditions according to the user action policy after a user responds to the advertisement information, and send the user response action and the corresponding advertisement identifier to the advertisement server if the user response action meets the preset conditions.

11. The advertisement information system of claim 10, wherein the terminal comprises:
a service client, adapted to: judge whether the user response action meets the preset conditions according to the user action policy after the user responds to the advertisement information, and forward the user response action and the corresponding advertisement identifier if the user response action meets the preset conditions; and
an advertisement client, adapted to store the user response action and the corresponding advertisement identifier received from the service client;
or
a service client, adapted to send the user response action and the corresponding advertisement identifier after the user responds to the advertisement information; and
an advertisement client, adapted to: judge whether the user response action received from the service client meets the preset conditions according to the user action policy received from the advertisement server, and store the user response action and the corresponding advertisement identifier if the user response action meets the preset conditions.

12. The advertisement information system of claim 11, further comprising:
a service server, adapted to: receive the advertisement information and advertisement identifier from the advertisement server, and forward the advertisement information and advertisement identifier to the service client; and
a policy storing unit, adapted to store the user action policy delivered by the advertisement server.

13. The advertisement information system of claim 12, wherein: the service client and the advertisement client may be integrated together or set independently; and
the policy storing unit may be integrated with the advertisement client, or set independently.

14. An advertisement server, comprising:
a policy managing unit, adapted to: set a user action policy, and manage the user action policy;
an advertisement information generating unit, adapted to generate advertisement information and an advertisement identifier; and
a sending unit, adapted to deliver the advertisement identifier, user action policy and advertisement information.

15. The advertisement server of claim 14, further comprising:
an obtaining unit, adapted to obtain a stored user response action and the corresponding advertisement identifier from an advertisement client;
a charging unit, adapted to charge an advertiser according to the obtained user response action and the corresponding advertisement identifier.

16. An advertisement client, comprising:
a receiving unit, adapted to receive an advertisement identifier, a user action policy and a current user response action;
a judging unit, adapted to judge whether the current user response action matches a user response action carried in the user action policy; and
a storing unit, adapted to store the current user response action and the corresponding advertisement identifier if the current user response action matches the user response action carried in the user action policy.

17. A terminal, comprising:
a service client, adapted to: receive a user action policy, advertisement information and an advertisement identifier, judge whether the user response action meets preset conditions according to the user action policy after a user responds to the advertisement information, and forward the user response action and the corresponding advertisement identifier if the user response action meets the preset conditions; and
an advertisement client, adapted to store the user response action and the corresponding advertisement identifier received from the service client;
or
a service client, adapted to receive advertisement information and an advertisement identifier, and send a user response action and a corresponding advertisement identifier after a user responds to the advertisement information; and
an advertisement client, adapted to: judge whether the user response action received from the service client meets the preset conditions according to the user action policy received from the advertisement server, and store the user response action and the corresponding advertisement identifier if the user response action meets the preset conditions.
